# EUROPÄISCHE PATENTANMELDUNG

(11) **EP 4 516 572 A1**
(43) Veröffentlichungstag der Anmeldung: **05.03.2025**
(21) Anmeldenummer: 24191595.8
(22) Anmeldetag: 29.07.2024
(51) Int. Cl.: B60L 53/10, B60L 53/14, B60L 53/302, B60L 53/30, B60L 53/31, B60L 53/51, B60L 53/53, G06Q 50/06, G07F 15/00

(54) **LADESTATION MIT MINDESTENS EINEM PHOTOVOLTAIK-MODUL**

(30) Priorität: 01.08.2023 DE 102023120442
(71) Anmelder: ads-tec Energy GmbH, 72622 Nürtingen (DE)
(72) Erfinder: SPEIDEL, Thomas, 71706 Markgröningen (DE); MOLCHANOV, Roman, 72654 Neckartenzlingen (DE)
(74) Vertreter: Kordel, Mattias

(57) **Zusammenfassung**

Die Erfindung betrifft eine Ladestation (1) mit einem Gehäuse (3), einem elektrischen Energiespeicher (5), und mindestens einem Photovoltaik-Modul (7), wobei
- das mindestens eine Photovoltaik-Modul (7) mit dem Gehäuse (3) mechanisch verbunden ist, und wobei
- das mindestens eine Photovoltaik-Modul (7) elektrisch mit dem elektrischen Energiespeicher (5) verbunden ist, sodass der elektrische Energiespeicher (5) mit von dem mindestens einen Photovoltaik-Modul (7) generierter elektrischer Leistung geladen werden kann.

## Beschreibung

Die Erfindung betrifft eine Ladestation, insbesondere für Elektrofahrzeuge, mit mindestens einem Photovoltaik-Modul.

Es ist bekannt, dass eine Ladestation, insbesondere für Elektrofahrzeuge, ohne Berücksichtigung von Ladevorgängen eine tägliche Standby-Leistungsaufnahme von 12 kW bis 24 kW aufweist. Diese Standby-Leistung muss entweder aus einem öffentlichen Stromnetz oder einem integrierten elektrischen Energiespeicher - falls die Ladestation einen solchen elektrischen Energiespeicher aufweist und optional nicht mit dem öffentlichen Stromnetz verbunden ist - entnommen werden. Damit entstehen nachteilig zusätzliche Kosten zum Betreiben der Ladestation. Weiterhin muss der elektrische Energiespeicher - insbesondere bei Ladestationen, die nicht mit dem öffentlichen Stromnetz verbunden sind - öfter ausgetauscht und/oder geladen werden, wodurch zusätzliche Kosten anfallen. Weiterhin wirkt sich die tägliche Standby-Leistungsaufnahme, die damit durch konventionell erzeugte elektrische Leistung gedeckt wird, negativ auf eine CO₂-Bilanz der Ladesäule aus.

Der Erfindung liegt daher die Aufgabe zugrunde, eine Ladestation mit mindestens einem Photovoltaik-Modul zu schaffen, wobei die genannten Nachteile zumindest reduziert sind, vorzugsweise nicht auftreten.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten bevorzugten Ausführungsformen.

Die Aufgabe wird insbesondere gelöst, indem eine Ladestation, insbesondere für Elektrofahrzeuge, insbesondere für elektrische PKW oder LKW, mit einem Gehäuse, einem elektrischen Energiespeicher, und mindestens einem Photovoltaik-Modul geschaffen wird. Das mindestens eine Photovoltaik-Modul ist mit dem Gehäuse mechanisch verbunden. Zusätzlich ist das mindestens eine Photovoltaik-Modul elektrisch mit dem elektrischen Energiespeicher verbunden, sodass der elektrische Energiespeicher mit von dem mindestens einen Photovoltaik-Modul generierter elektrischer Leistung geladen werden kann. Vorteilhafterweise wird damit eine CO₂-Bilanz der Ladesäule verbessert, da eine Aufladung des elektrischen Energiespeichers mit konventionell erzeugter elektrischer Leistung verringert wird. Vorteilhaft kann außerdem die Standby-Leistungsaufnahme zumindest teilweise, vorzugsweise vollständig, mit von dem mindestens einen Photovoltaik-Modul generierter elektrischer Leistung gedeckt werden, was die CO₂-Bilanz weiter verbessert.

Als Ladestation wird in der Elektrotechnik jedwede, insbesondere stationäre oder mobile, Vorrichtung oder elektrische Anlage bezeichnet, welche dazu dient, mobilen akkubetriebenen Geräten, Maschinen oder Kraftfahrzeugen durch einfaches Einstellen oder Einstecken Energie zuzuführen, ohne den Energiespeicher - etwa die Traktionsbatterie eines Elektroautos - zwangsläufig entnehmen zu müssen. Ladestationen für Elektroautos werden mitunter auch als "Stromtankstellen" bezeichnet und können mehrere Ladepunkte umfassen. Bekannt sind hier insbesondere Gleichstrom-Schnellladesysteme (high performance charging systems oder high power charging systems, HPC-Systeme) wie das in Europa verbreitete, sogenannte kombinierte Ladesystem (combined charging system, CCS). Beim gattungsmäßigen Gleichstromladen wird Gleichstrom aus der Ladestation direkt in die Batterie des Fahrzeugs eingespeist und hierzu durch einen leistungsstarken Gleichrichter, bevorzugt der Ladestation, vom Stromnetz oder durch große Pufferakkumulatoren an z.B. Solartankstellen bereitgestellt. Im Fahrzeug befindet sich ein Batteriemanagementsystem, das mit der Ladestation direkt oder indirekt kommuniziert, um die Stromstärke und -spannung anzupassen oder bei Erreichung einer vorbestimmten Kapazitätsgrenze den Vorgang zu beenden. Eine Leistungselektronik befindet sich hierbei üblicherweise in der Ladestation. Da die Gleichstromanschlüsse der Ladestation direkt - ohne Umweg über einen AC/DC-Wandler des Fahrzeugs - mit entsprechenden Anschlüssen der Traktionsbatterie verbunden werden, lassen sich verlustarm hohe Ladeströme übertragen, was kurze Ladezeiten ermöglicht.

In einer Ausführungsform ist die Ladestation als eine Ladesäule ausgebildet. Insbesondere weist die Ladestation mindestens einen Ladepunkt, insbesondere genau einen Ladepunkt oder genau zwei Ladepunkte, auf.

Insbesondere ist die Ladestation als Schnellladestation ausgebildet. In einer Ausführungsform ist die Ladestation als batteriegestützte Ladestation, insbesondere als batteriegestützte Schnellladestation, ausgebildet.

Insbesondere generiert das mindestens eine Photovoltaik-Modul die elektrische Leistung als Gleichstrom. Alternativ generiert das mindestens eine Photovoltaik-Modul die elektrische Leistung - insbesondere in Kombination mit einem Wechselrichter - als Wechselstrom.

Insbesondere ist die Ladestation elektrisch autark ausgebildet und damit insbesondere nicht mit dem öffentlichen Stromnetz verbunden - insbesondere Insel-Ladestation genannt. Alternativ ist die Ladestation elektrisch mit einem öffentlichen Stromnetz verbunden - insbesondere Netz-Ladestation genannt.

In einer Ausführungsform ist die Ladestation eingerichtet, um mit einem Stromnetz, insbesondere einem öffentlichen Stromnetz, verbunden zu werden, insbesondere um - wahlweise oder abhängig von einem Betriebszustand der Ladestation - elektrische Leistung aus dem Stromnetz zu beziehen oder in das Stromnetz einzuspeisen. Bevorzugt ist die Ladestation eingerichtet, um in einem Aufnahmezustand elektrische Leistung aus dem Stromnetz zu beziehen und in einem Einspeisezustand elektrische Leistung in das Stromnetz einzuspeisen. Die aus dem Stromnetz bezogene Leistung kann zum Aufladen einer elektrischen Vorrichtung, insbesondere eines Elektrofahrzeugs, verwendet werden, alternativ oder zusätzlich kann sie zum Aufladen des elektrischen Energiespeichers verwendet werden. Die in das Stromnetz eingespeiste elektrische Leistung kann von dem Photovoltaik-Modul stammen, alternativ oder zusätzlich kann die in das Stromnetz eingespeiste elektrische Leistung aus dem elektrischen Energiespeicher entnommen werden. Bevorzugt kann eine Einspeisung der von dem Photovoltaik-Modul bereitgestellten elektrischen Leistung in das Stromnetz blockiert werden, sodass die entsprechende Energie vollständig in den elektrischen Energiespeicher geladen wird.

Insbesondere weist die Ladestation einen Gleichrichter auf. Der Gleichrichter ist eingerichtet, um einen Wechselstrom des öffentlichen Stromnetzes in einen Gleichstrom zum Laden des elektrischen Energiespeichers umzuwandeln. Alternativ oder zusätzlich ist der Gleichrichter eingerichtet, um einen Wechselstrom des mindestens einen Photovoltaik-Moduls in einen Gleichstrom zum Laden des elektrischen Energiespeichers umzuwandeln. Insbesondere kann die Ladestation eine Mehrzahl an Gleichrichter aufweisen, wobei ein erster Gleichrichter eingerichtet ist, um einen Wechselstrom des mindestens einen Photovoltaik-Moduls in einen Gleichstrom zum Laden des elektrischen Energiespeichers umzuwandeln, und ein zweiter Gleichrichter eingerichtet ist, um einen Wechselstrom des öffentlichen Stromnetzes in einen Gleichstrom zum Laden des elektrischen Energiespeichers umzuwandeln.

In einer Ausgestaltung generiert das mindestens eine Photovoltaik-Modul die elektrische Leistung als Gleichstrom und ist elektrisch direkt mit dem elektrischen Energiespeicher verbunden. Optional ist das Photovoltaik-Modul zusätzlich mit einem Wechselrichter verbunden, der den Gleichstrom in Wechselstrom wandeln kann, um bedarfsweise elektrische Leistung in das Stromnetz einzuspeisen. Vorteilhaft kann dann der elektrische Energiespeicher verlustfrei mit dem unmittelbar durch das Photovoltaik-Modul generierten Gleichstrom geladen werden, während es gleichwohl möglich ist, elektrische Leistung in Form von Wechselstrom in das Stromnetz einzuspeisen.

Insbesondere weist ein Photovoltaikmodul des mindestens einen Photovoltaik-Moduls eine Breite von 150 cm bis 200 cm und eine Länge von 50 cm bis 100 cm auf. Damit weist ein Photovoltaikmodul des mindestens einen Photovoltaik-Moduls eine Fläche von 0,75 m² bis 2 m² auf.

In einer Ausgestaltung weist die Ladestation mindestens eine Betriebsvorrichtung, ausgewählt aus einer Gruppe, bestehend aus einer Anzeigevorrichtung, einer Klimatisierungsvorrichtung, einer Bedienvorrichtung, und einer beliebigen Kombination von mindestens zwei der genannten Betriebsvorrichtungen, auf. Die mindestens eine Betriebsvorrichtung ist elektrisch mit dem mindestens einen Photovoltaikmodul verbunden. Damit ist es möglich, die mindestens eine Betriebsvorrichtung direkt mit der von dem mindestens einen Photovoltaik-Modul generierten elektrischen Leistung zu betreiben. Zusätzlich ist die mindestens eine Betriebsvorrichtung insbesondere mit dem elektrischen Energiespeicher elektrisch verbunden. Insbesondere weist die Ladestation eine Standby-Leistungsaufnahme - insbesondere eine Leistungsaufnahme ohne die Abgabe von elektrischer Leistung zum Aufladen eines Kraftfahrzeugs - von 500 Wh bis 1000 Wh auf, sodass täglich zum Betreiben der Ladestation von 12 kW bis 24 kW aus dem elektrischen Leistungsspeicher entnommen werden. Vorteilhafterweise wird damit die elektrische Energie des elektrischen Energiespeichers zumindest nur teilweise - insbesondere nur wenn das mindestens eine Photovoltaik-Modul keine elektrische Leistung generiert - für einen Standby-Betrieb der Ladestation genutzt und steht potentiellen Ladevorgängen zur Verfügung.

Insbesondere weist der elektrische Energiespeicher eine Kapazität von 280 kWh auf. Damit ist der elektrische Energiespeicher einer Ladestation ohne Photovoltaik-Modul bei einer täglichen Standby-Leistungsaufnahme von 12 kW bis 24 kW und ohne Ladevorgänge nach ungefähr 10 bis 23 Tagen entleert. Vorteilhafterweise erhöht das mindestens eine Photovoltaik-Modul die Dauer, bis der elektrische Energiespeicher bei einer solchen Standby-Leistungsaufnahme und ohne Ladevorgänge entleert ist.

Insbesondere weist ein Photovoltaik-Modul des mindestens einen Photovoltaik-Moduls eine Leistung von mindestens 300 Wₚ auf. Im Kontext der vorliegenden technischen Lehre bedeutet das, dass das eine Photovoltaik-Modul des mindestens einen Photovoltaik-Moduls eine Nennleistung gemäß Standard-Testbedingungen - bei einer Photovoltaik-Modul-Temperatur von 25 °C, einer Bestrahlungsstärke von 1000 W/m² und einem Sonnenlichtspektrum gemäß AM = 1,5 - von mindestens 300 Wh aufweist. Insbesondere wird mittels des einen Photovoltaik-Moduls im Jahr eine elektrische Leistung von 200 kW bis 300 kW generiert, sodass mittels des einen Photovoltaik-Moduls der elektrische Energiespeicher pro Jahr einmal aufgeladen werden kann. In einer Ausgestaltung, bei welcher die Ladestation elektrisch mit einem öffentlichen Stromnetz verbunden ist, können damit vorteilhafterweise - bei Kosten von 0,30 € pro kWh aus dem öffentlichen Stromnetz - Kosten in Höhe von 60 € bis 90 € jährlich gespart werden. In einer Ausgestaltung, bei welcher die Ladestation elektrisch autark ausgebildet ist, kostet eine einzige Aufladung des elektrischen Energiespeichers - inklusive Kosten für Mitarbeiter und Logistik - ungefähr 400 €, sodass durch ein einziges Photovoltaik-Modul jährlich Kosten in Höhe von 400 € eingespart werden können. Vorteilhafterweise vervielfacht sich die pro Jahr generierte elektrische Leistung und damit die Anzahl der möglichen Aufladungen des elektrischen Energiespeichers durch die Photovoltaik-Module und die eingesparten Kosten mit der Anzahl an Photovoltaik-Modulen.

Gemäß einer Weiterbildung der Erfindung ist vorgesehen, dass die Ladestation zusätzlich ein Regelmodul aufweist. Das Regelmodul ist elektrisch zwischen dem mindestens einen Photovoltaik-Modul und dem elektrischen Energiespeicher angeordnet. Weiterhin ist das Regelmodul eingerichtet, um die von dem mindestens einen Photovoltaik-Modul generierte elektrische Leistung ausschließlich dem elektrischen Energiespeicher zuzuführen. Vorteilhafterweise ist damit gewährleistet, dass von dem mindestens einen Photovoltaik-Modul generierte elektrische Leistung für den Eigenbedarf der Ladestation genutzt wird.

In einer Ausgestaltung ist die Ladestation elektrisch mit einem öffentlichen Stromnetz verbindbar, optional verbunden, und optional generiert das mindestens eine Photovoltaik-Modul die elektrische Leistung - insbesondere in Kombination mit einem Wechselrichter - als Wechselstrom. Weiterhin sind das öffentliche Stromnetz und das mindestens eine Photovoltaik-Modul elektrisch mit dem Regelmodul verbunden. Dabei ist das Regelmodul insbesondere zusätzlich eingerichtet, um eine Einspeisung der von dem mindestens einen Photovoltaik-Modul generierten elektrischen Leistung in das öffentliche Stromnetz zu blockieren. Damit ist vorteilhafterweise gewährleistet, dass die Ladestation elektrische Leistung nur für den Eigenbedarf erzeugt und keine Einspeisung durchgeführt wird.

In einer Ausgestaltung ist das mindestens eine Photovoltaik-Modul über eine erste Befestigungsvorrichtung und/oder eine zweite Befestigungsvorrichtung mit dem Gehäuse verbunden. Insbesondere ist die erste Befestigungsvorrichtung als Schnellverschluss ausgebildet. Alternativ oder zusätzlich ist die zweite Befestigungsvorrichtung als Schnellverschluss ausgebildet.

Gemäß einer Weiterbildung der Erfindung ist vorgesehen, dass das mindestens eine Photovoltaik-Modul mittels einer Trägervorrichtung mit dem Gehäuse verbunden ist. Vorteilhafterweise ist es mittels der Trägervorrichtung möglich, das mindestens eine Photovoltaik-Modul unabhängig von einer Ausrichtung des Gehäuses der Ladestation auszurichten und/oder anzuordnen.

Insbesondere ist die Trägervorrichtung bei einer bestimmungsgemäßen Aufstellung der Ladestation im Wesentlichen lotrecht, insbesondere lotrecht, mit dem Gehäuse verbunden. Insbesondere ist damit eine Axialrichtung der Trägervorrichtung im Wesentlichen lotrecht, insbesondere lotrecht, ausgerichtet. Alternativ ist die Trägervorrichtung bei einer bestimmungsgemäßen Aufstellung der Ladestation im Wesentlichen waagerecht, insbesondere waagerecht mit dem Gehäuse verbunden.

In einer Ausgestaltung ist die Trägervorrichtung, insbesondere eine Axialrichtung der Trägervorrichtung, zumindest bereichsweise, insbesondere vollständig, im Wesentlichen lotrecht, insbesondere lotrecht, ausgerichtet. Alternativ oder zusätzlich ist die Trägervorrichtung, insbesondere eine Axialrichtung der Trägervorrichtung, zumindest bereichsweise, insbesondere vollständig, im Wesentlichen waagerecht, insbesondere waagerecht, ausgerichtet. Alternativ oder zusätzlich ist die Trägervorrichtung L-förmig ausgebildet, wobei insbesondere bei einer bestimmungsgemäßen Aufstellung der Ladestation ein erster Bereich der Trägervorrichtung im Wesentlichen lotrecht, insbesondere lotrecht, und ein zweiter Bereich der Trägervorrichtung im Wesentlichen waagerecht, insbesondere waagerecht, ausgerichtet ist.

Insbesondere ist die Trägervorrichtung als Rohr, insbesondere als Stahlrohr, ausgebildet. Alternativ oder zusätzlich weist die Trägervorrichtung einen Faserverbundwerkstoff auf oder besteht aus einem Faserverbundwerkstoff.

In einer Ausgestaltung ist die Trägervorrichtung über die erste Befestigungsvorrichtung mit dem Gehäuse verbunden. Alternativ oder zusätzlich ist das mindestens eine Photovoltaik-Modul über die zweite Befestigungsvorrichtung mit der Trägervorrichtung verbunden.

In einer Ausgestaltung ist sowohl die Trägervorrichtung, als auch die erste Befestigungsvorrichtung als Rohr ausgebildet. Bei einer Anordnung der Trägervorrichtung an dem Gehäuse umgreift die Trägervorrichtung die erste Befestigungsvorrichtung - insbesondere ist das Rohr der ersten Befestigungsvorrichtung in dem Rohr der Trägervorrichtung angeordnet. Alternativ umgreift die erste Befestigungsvorrichtung die Trägervorrichtung bei einer Anordnung der Trägervorrichtung an dem Gehäuse - insbesondere ist das Rohr der Trägervorrichtung in dem Rohr der ersten Befestigungsvorrichtung angeordnet. Vorteilhafterweise wird durch die Anordnung der Rohre ineinander ein Kippmoment der Trägervorrichtung, insbesondere relativ zu dem Gehäuse, reduziert.

Gemäß einer Weiterbildung der Erfindung ist vorgesehen, dass die Trägervorrichtung über die erste Befestigungsvorrichtung schwenkbar mit dem Gehäuse verbunden ist. Damit ist es möglich, die Trägervorrichtung und damit das mindestens eine an der Trägervorrichtung angeordnete Photovoltaik-Modul relativ zu dem Gehäuse zu drehen und vorteilhafterweise auszurichten.

Insbesondere weist die erste Befestigungsvorrichtung ein erstes Drehgelenk auf. Alternativ oder zusätzlich weist die erste Befestigungsvorrichtung einen ersten Aktor auf. Der erste Aktor ist insbesondere eingerichtet, um die Trägervorrichtung relativ zu dem Gehäuse zu drehen. Insbesondere ist der erste Aktor kabelgebunden oder kabellos ansteuerbar, sodass ein Betreiber der Ladestation in einfacher Weise eine Drehung der Trägervorrichtung relativ zu dem Gehäuse initiieren kann.

Insbesondere ist die erste Befestigungsvorrichtung eingerichtet, um die Trägervorrichtung um die Axialrichtung der Trägervorrichtung zu drehen.

Gemäß einer Weiterbildung der Erfindung ist vorgesehen, dass das mindestens eine Photovoltaik-Modul über die zweite Befestigungsvorrichtung schwenkbar mit der Trägervorrichtung verbunden ist. Damit ist es möglich, das mindestens eine an der Trägervorrichtung angeordnete Photovoltaik-Modul relativ zu der Trägervorrichtung zu drehen und vorteilhafterweise auszurichten.

Insbesondere weist die zweite Befestigungsvorrichtung ein zweites Drehgelenk auf. Alternativ oder zusätzlich weist die zweite Befestigungsvorrichtung einen zweiten Aktor auf. Der zweite Aktor ist insbesondere eingerichtet, um das mindestens eine Photovoltaik-Modul relativ zu der Trägervorrichtung zu drehen. Insbesondere ist der zweite Aktor kabelgebunden oder kabellos ansteuerbar, sodass der Betreiber der Ladestation in einfacher Weise eine Drehung des mindestens einen Photovoltaik-Moduls relativ zu der Trägervorrichtung initiieren kann.

Insbesondere ist die zweite Befestigungsvorrichtung eingerichtet, um das mindestens eine Photovoltaik-Modul um die Axialrichtung der Trägervorrichtung zu drehen. Alternativ oder zusätzlich ist die zweite Befestigungsvorrichtung eingerichtet, um das mindestens eine Photovoltaik-Modul um eine andere Rotationsachse - insbesondere eine senkrecht zur Axialrichtung der Trägervorrichtung ausgerichtete Rotationsachse - zu drehen. Alternativ oder zusätzlich ist die zweite Befestigungsvorrichtung eingerichtet, um das mindestens eine Photovoltaik-Modul relativ zu der Trägervorrichtung zu neigen.

In einer Ausgestaltung weist die Ladestation die erste Befestigungsvorrichtung und die zweite Befestigungsvorrichtung auf. Insbesondere ist die Trägervorrichtung über die erste Befestigungsvorrichtung schwenkbar mit dem Gehäuse verbunden und das mindestens eine Photovoltaik-Modul ist über die zweite Befestigungsvorrichtung schwenkbar mit der Trägervorrichtung verbunden. Vorteilhafterweise ist es damit möglich, das mindestens eine Photovoltaik-Modul in einer beliebigen Ausrichtung relativ zu dem Gehäuse auszurichten und/oder anzuordnen.

In einer weiteren Ausgestaltung weist die Ladestation ein Steuerungsmodul auf, wobei das Steuerungsmodul eingerichtet ist, um den ersten Aktor und/oder den zweiten Aktor anzusteuern. Insbesondere ist das Steuerungsmodul eingerichtet, um den ersten Aktor und/oder den zweiten Aktor derart anzusteuern, dass das mindestens eine Photovoltaik-Modul - insbesondere im Verlauf eines Tages - gemäß einer vorbestimmten Trajektorie relativ zu dem Gehäuse bewegt, insbesondere dem Sonnenstand nachgeführt wird.

Gemäß einer Weiterbildung der Erfindung ist vorgesehen, dass die Ladestation eine Sonnenstand-Messvorrichtung aufweist. Die Sonnenstand-Messvorrichtung ist eingerichtet, um den momentanen Sonnenstand zu ermitteln und den ersten Aktor der ersten Befestigungsvorrichtung derart anzusteuern, dass das mindestens eine Photovoltaik-Modul entsprechend dem ermittelten Sonnenstand ausgerichtet werden kann. Alternativ oder zusätzlich ist die Sonnenstand-Messvorrichtung eingerichtet, um den Sonnenstand zu ermitteln und den zweiten Aktor der zweiten Befestigungsvorrichtung derart anzusteuern, dass das mindestens eine Photovoltaik-Modul entsprechend dem ermittelten Sonnenstand ausgerichtet werden kann.

Insbesondere weist die Sonnenstand-Messvorrichtung einen Sonnenstand-Sensor auf. Insbesondere ist der Sonnenstand-Sensor eingerichtet, um zyklisch den Sonnenstand, insbesondere als einen hellsten Punkt am Himmel, zu bestimmen. Zusätzlich weist die Sonnenstand-Messvorrichtung das Steuerungsmodul auf, wobei das Steuerungsmodul eingerichtet ist, um den ersten Aktor und/oder den zweiten Aktor anzusteuern. Insbesondere ist das Steuerungsmodul bei einer Verwendung in Verbindung mit dem Sonnenstand-Sensor eingerichtet, um den ersten Aktor und/oder den zweiten Aktor derart anzusteuern, dass das mindestens eine Photovoltaik-Modul entsprechend dem zuletzt bestimmten hellsten Punkt am Himmel - insbesondere zu dem zuletzt bestimmten hellsten Punkt am Himmel hin - ausgerichtet wird. Damit wird vorteilhafterweise die Leistungserzeugung des mindestens einen Photovoltaik-Moduls gesteigert.

Gemäß einer Weiterbildung der Erfindung ist vorgesehen, dass die Ladestation einen Rahmen aufweist. Dabei ist das mindestens eine Photovoltaik-Modul in dem Rahmen angeordnet. Weiterhin weist die Ladestation mindestens eine Befestigungsvorrichtung - insbesondere die erste Befestigungsvorrichtung und/oder die zweite Befestigungsvorrichtung - auf, und der Rahmen ist über die mindestens eine Befestigungsvorrichtung mit dem Gehäuse verbunden. Vorteilhafterweise kann damit der Rahmen zusammen mit dem mindestens einen Photovoltaik-Modul schnell und in einfacher Weise von dem Gehäuse abgenommen werden. Darüber hinaus kann der Rahmen zusammen mit dem mindestens einen Photovoltaik-Modul vorteilhafterweise relativ zu dem Gehäuse gedreht werden.

In einer Ausgestaltung weist der Rahmen eine Ausnehmung auf, in der das mindestens eine Photovoltaik-Modul angeordnet ist. Alternativ oder zusätzlich umgreift der Rahmen das mindestens eine Photovoltaik-Modul entlang der Breite und der Länge des mindestens einen Photovoltaik-Moduls, insbesondere vollständig umlaufend.

Insbesondere ist die zweite Befestigungsvorrichtung zentrisch an dem Rahmen angeordnet. Alternativ oder zusätzlich ist die zweite Befestigungsvorrichtung in einem Schwerpunkt des Rahmens mit dem darin angeordneten mindestens einen Photovoltaik-Modul angeordnet.

Insbesondere ist der Rahmen über die zweite Befestigungsvorrichtung mit der Trägervorrichtung verbunden.

Gemäß einer Weiterbildung der Erfindung ist vorgesehen, dass das mindestens eine Photovoltaik-Modul als ein Dach ausgebildet ist. Vorteilhafterweise dient das Dach als Wetterschutz für einen Benutzer der Ladestation und/oder als Blendschutz für die Anzeigevorrichtung.

Insbesondere ist das Gehäuse geodätisch unter dem Dach angeordnet.

Gemäß einer Weiterbildung der Erfindung ist vorgesehen, dass sich das Dach zumindest teilweise über eine der Ladestation zugeordnete Kraftfahrzeug-Stellfläche erstreckt. Vorteilhafterweise dient das Dach als Wetterschutz für ein zu ladendes Kraftfahrzeug, das auf der Kraftfahrzeug-Stellfläche geparkt ist.

Insbesondere weist das mindestens eine Photovoltaik-Modul - insbesondere das Dach - und die der Ladestation zugeordnete Kraftfahrzeug-Stellfläche einen vertikalen Abstand von 220 cm bis 350 cm, insbesondere von 230 cm bis 300 cm, auf. Insbesondere wird der vertikale Abstand zwischen dem mindestens einen Photovoltaik-Modul - insbesondere dem Dach - und der der Ladestation zugeordneten Kraftfahrzeug-Stellfläche derart gewählt, dass ein Benutzer der Ladestation aufrecht unter dem mindestens einen Photovoltaik-Modul - insbesondere dem Dach - hindurch gehen kann - insbesondere ohne das mindestens eine Photovoltaik-Modul - insbesondere das Dach - zu berühren.

Gemäß einer Weiterbildung der Erfindung ist vorgesehen, dass das Dach eine Neigung von mehr als 0° bis 40°, insbesondere von 1° bis 30°, insbesondere von 5° bis 20°, aufweist. Vorteilhafterweise verhindert die Neigung des Daches, dass sich Wasser - insbesondere Regenwasser - und/oder Schnee auf dem Dach staut und/oder ansammelt. Weiterhin kann mittels der Neigung eine Ablaufrichtung von Regenwasser und/oder Schmelzwasser und/oder eine Abrutschrichtung von Schnee von dem Dach vorgegeben und/oder bestimmt werden.

Gemäß einer Weiterbildung der Erfindung ist vorgesehen, dass die Ladestation eine Beleuchtungseinrichtung aufweist. Die Beleuchtungseinrichtung ist derart an dem mindestens einen Photovoltaik-Modul angeordnet, dass von der Beleuchtungseinrichtung erzeugtes Licht geodätisch nach unten abgestrahlt wird. Vorteilhafterweise ist es damit möglich, eine Umgebung der Ladestation, insbesondere eine der Ladestation zugeordnete Kraftfahrzeug-Stellfläche, zu beleuchten und damit zu jeder Tageszeit eine einfache Bedienung der Ladestation zu ermöglichen.

Gemäß einer Weiterbildung der Erfindung ist vorgesehen, dass die Ladestation sechs bis 16 Photovoltaik-Module als das mindestens eine Photovoltaik-Modul aufweist. In einer Ausgestaltung sind die sechs bis 16 Photovoltaik-Module in dem Rahmen angeordnet und gehalten.

In einer Ausgestaltung sind die sechs bis 16 Photovoltaik-Module als Dach ausgebildet. Insbesondere weist das Dach damit eine Fläche von 4,5 m² bis 32 m² auf. Vorteilhafterweise ist es mittels eines solchen Daches möglich, die der Ladestation zugeordnete Kraftfahrzeug-Stellfläche - insbesondere mit einer Kraftfahrzeug-Stellflächen-Breite von mindestens 2,5 m und einer Kraftfahrzeug-Stellflächen-Länge von mindestens 4,5 m - zumindest teilweise zu überdachen. Vorzugsweise ist es mittels eines solchen Daches möglich, zwei der Ladestation zugeordnete Kraftfahrzeug-Stellflächen komplett - insbesondere in Form eines Carports - zu überdachen.

In der nachfolgenden Tabelle sind für ein Dach mit sechs bis 16 Photovoltaik-Modulen die elektrische Leistung pro Jahr in kWh und die Einsparungen in € aufgelistet. Dabei wird, wie schon zuvor, angenommen, dass ein Photovoltaik-Modul eine Leistung von mindestens 300 kWₚ aufweist und die Kosten pro kWh elektrische Leistung aus dem öffentlichen Stromnetz 0,30 € betragen.

| Anzahl Photovoltaik-Module | elektrische Leistung pro Jahr | Einsparung pro Jahr - Netz-Ladestation | Einsparung pro Jahr - Insel-Ladestation |
|---|---|---|---|
| 6 | 1200 kWh bis 1800 kWh | 360 € bis 540 € | 2400 € |
| 7 | 1400 kWh bis 2100 kWh | 420 € bis 630 € | 2800 € |
| 8 | 1600 kWh bis 2400 kWh | 480 € bis 720 € | 3200 € |
| 9 | 1800 kWh bis 2700 kWh | 540 € bis 810 € | 3600 € |
| 10 | 2000 kWh bis 3000 kWh | 600 € bis 900 € | 4000 € |
| 11 | 2200 kWh bis 3300 kWh | 660 € bis 990 € | 4400 € |
| 12 | 2400 kWh bis 3600 kWh | 720 € bis 1080 € | 4800 € |
| 13 | 2600 kWh bis 3900 kWh | 780 € bis 1170 € | 5200 € |
| 14 | 2800 kWh bis 4200 kWh | 840 € bis 1260 € | 5600 € |
| 15 | 3000 kWh bis 4500 kWh | 900 € bis 1350 € | 6000 € |
| 16 | 3200 kWh bis 4800 kWh | 960 € bis 1440 € | 6400 € |

Insbesondere betragen die Kosten für eine erfindungsgemäße Ladestation oder eine Ladestation nach einer oder mehreren der zuvor erläuterten Ausgestaltungen - insbesondere mit sechs Photovoltaik-Modulen - ungefähr 3000 € mehr als bei einer konventionellen Ladestation. Damit könnten sich die zusätzlichen Kosten von 3000 € bei einer Insel-Ladestation innerhalb von ungefähr 1,25 Jahren amortisieren.

Die Erfindung wird im Folgenden anhand der Zeichnung näher erläutert. Dabei zeigen:
- Fig. 1: eine schematische Darstellung eines ersten, zweiten und dritten Ausführungsbeispiels einer Ladestation,
- Fig. 2: eine schematische Darstellung eines vierten, fünften und sechsten Ausführungsbeispiels der Ladestation, und
- Fig. 3: eine schematische Darstellung eines siebten, achten und neunten Ausführungsbeispiels der Ladestation.

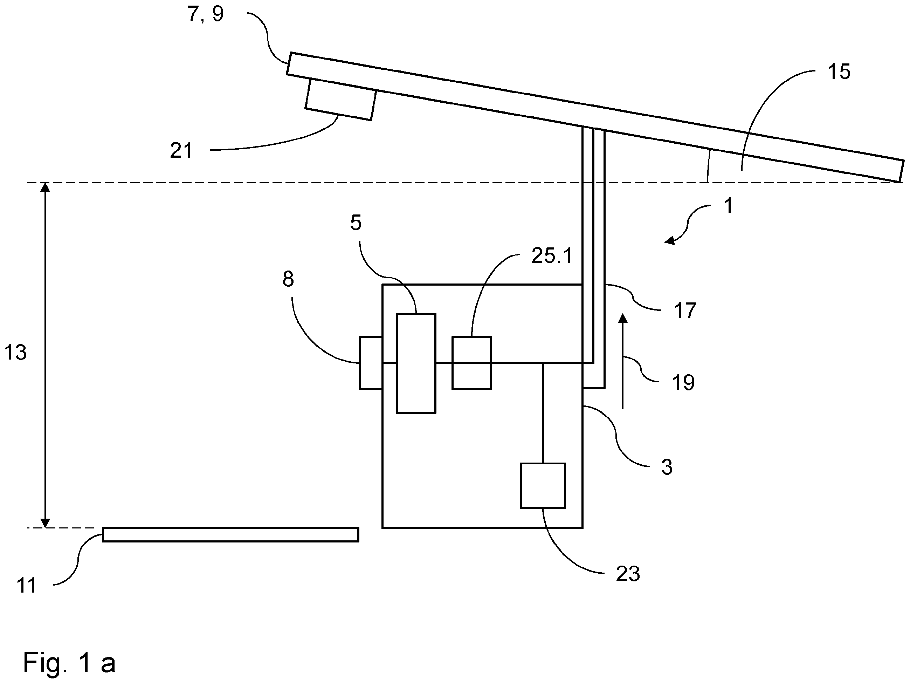

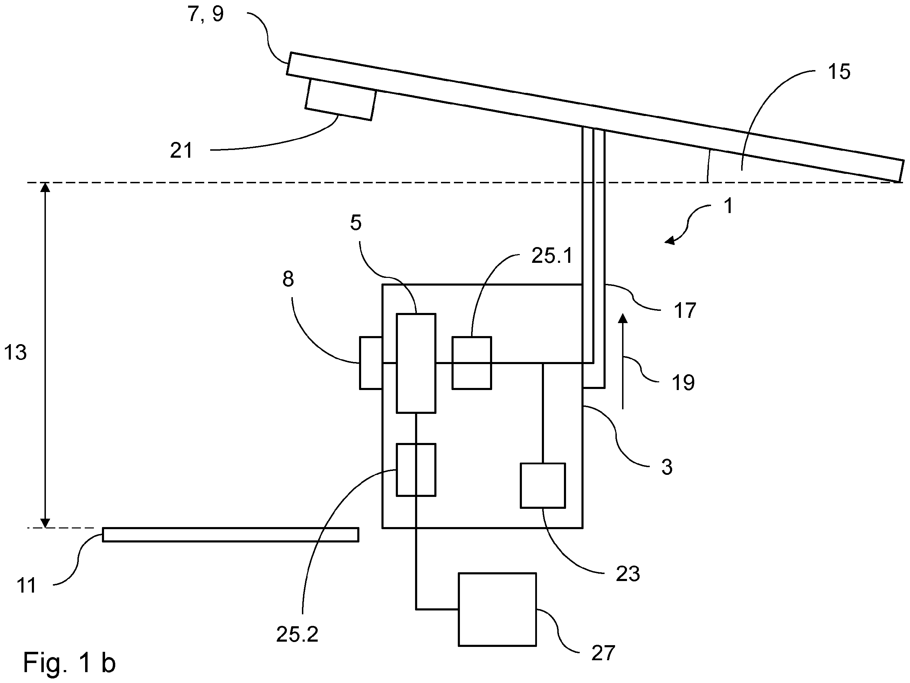

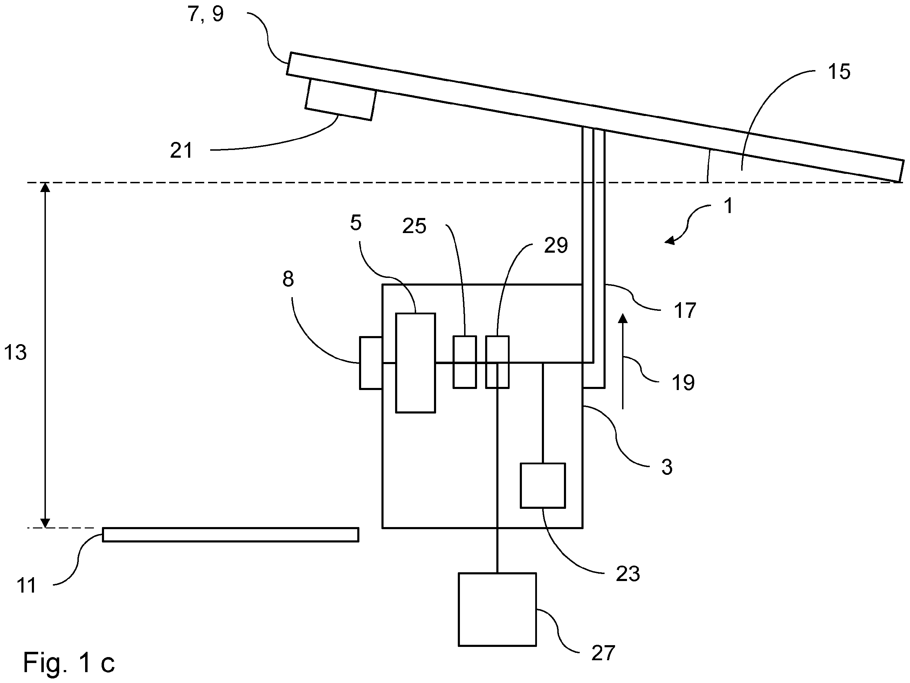

**Figur 1** zeigt eine schematische Darstellung eines ersten, zweiten und dritten Ausführungsbeispiels einer Ladestation 1 mit einem Gehäuse 3, einem elektrischen Energiespeicher 5 und mindestens einem Photovoltaik-Modul 7.

Das mindestens eine Photovoltaik-Modul 7 ist mit dem Gehäuse 3 mechanisch verbunden. Zusätzlich ist das mindestens eine Photovoltaik-Modul 7 elektrisch mit dem elektrischen Energiespeicher 5 verbunden, sodass der elektrische Energiespeicher 5 mit von dem mindestens einen Photovoltaik-Modul 7 generierter elektrischer Leistung geladen werden kann.

Insbesondere weist die Ladestation 1 zusätzlich mindestens einen Ladepunkt 8 auf. Der mindestens eine Ladepunkt 8 ist elektrisch mit dem elektrischen Energiespeicher 5 verbunden, wobei insbesondere Gleichstrom von dem elektrischen Energiespeicher 5 an den mindestens einen Ladepunkt 8 geleitet wird, um ein Elektrofahrzeug aufzuladen.

Insbesondere ist das mindestens eine Photovoltaik-Modul 7 als ein Dach 9 ausgebildet. Dabei ist insbesondere das Gehäuse 3 geodätisch unter dem Dach 9 angeordnet. Alternativ oder zusätzlich erstreckt sich das Dach 9 zumindest teilweise über eine der Ladestation 1 zugeordnete Kraftfahrzeug-Stellfläche 11.

Insbesondere weist das mindestens eine Photovoltaik-Modul 7 - insbesondere das Dach 9 - und die der Ladestation zugeordnete Kraftfahrzeug-Stellfläche 11 einen vertikalen Abstand 13 auf, der von 220 cm bis 350 cm, insbesondere von 230 cm bis 300 cm, beträgt. Alternativ oder zusätzlich weist das mindestens eine Photovoltaik-Modul 7 - insbesondere das Dach 9 - einen Neigungswinkel 15 auf, der mehr als 0° bis 40°, insbesondere von 1° bis 30°, insbesondere von 5° bis 20°, beträgt.

In einer bevorzugten Ausgestaltung weist die Ladestation 1 sechs bis 16 Photovoltaik-Module 7 als das mindestens eine Photovoltaik-Modul 7 auf. Insbesondere weist das Dach 9 sechs bis 16 Photovoltaik-Module 7 auf.

In einer weiteren bevorzugten Ausgestaltung ist das mindestens eine Photovoltaik-Modul 7 - insbesondere das Dach 9 - mittels einer Trägervorrichtung 17 mit dem Gehäuse 3 verbunden. Insbesondere ist die Trägervorrichtung 17 bei einer bestimmungsgemäßen Aufstellung der Ladestation 1 im Wesentlichen lotrecht, insbesondere lotrecht, mit dem Gehäuse 3 verbunden. Insbesondere ist eine Axialrichtung 19 der Trägervorrichtung 17 lotrecht ausgerichtet.

Insbesondere ist die Trägervorrichtung 17 als Rohr, insbesondere als Stahlrohr, ausgebildet. Alternativ oder zusätzlich weist die Trägervorrichtung 17 einen Faserverbundwerkstoff auf oder besteht aus einem Faserverbundwerkstoff.

Optional weist die Ladestation 1 eine Beleuchtungseinrichtung 21 auf. Die Beleuchtungseinrichtung 21 ist derart an dem mindestens einen Photovoltaik-Modul 7 - insbesondere an dem Dach 9 - angeordnet, dass von der Beleuchtungseinrichtung 21 erzeugtes Licht geodätisch nach unten abgestrahlt wird. Insbesondere beleuchtet die Beleuchtungseinrichtung 21 das Gehäuse 3 und/oder die der Ladestation 1 zugeordnete Kraftfahrzeug-Stellfläche 11.

Optional weist die Ladestation 1 eine Betriebsvorrichtung 23, ausgewählt aus einer Gruppe, bestehend aus einer Anzeigevorrichtung, einer Klimatisierungsvorrichtung, einer Bedienvorrichtung, und einer beliebigen Kombination von mindestens zwei der genannten Betriebsvorrichtungen, auf. Die mindestens eine Betriebsvorrichtung 23 ist elektrisch mit dem mindestens einen Photovoltaikmodul 7 verbunden, sodass die mindestens eine Betriebsvorrichtung 23 direkt mit der von dem mindestens einen Photovoltaik-Modul 7 generierten elektrischen Leistung betrieben werden kann. Zusätzlich ist die mindestens eine Betriebsvorrichtung 23 insbesondere mit dem elektrischen Energiespeicher 5 elektrisch verbunden.

**Figur 1** **a** zeigt die schematische Darstellung des ersten Ausführungsbeispiels der Ladestation 1. Die Ladestation 1 ist autark ausgebildet und wird ohne elektrische Verbindung zu einem Stromnetz betrieben.

In einer Ausgestaltung generiert das mindestens eine Photovoltaik-Modul 7 die elektrische Leistung als Gleichstrom und ist elektrisch direkt mit dem elektrischen Energiespeicher 5 verbunden.

In einer alternativen Ausgestaltung generiert das mindestens eine Photovoltaik-Modul 7 die elektrische Leistung als Wechselstrom. Daher weist die Ladestation 1 einen ersten Gleichrichter 25.1 auf, um einen Wechselstrom des mindestens einen Photovoltaik-Moduls 7 in einen Gleichstrom zum Laden des elektrischen Energiespeichers 5 umzuwandeln.

**Figur 1 b** zeigt die schematische Darstellung des zweiten Ausführungsbeispiels der Ladestation 1. Die Ladestation 1 ist elektrisch mit einem Stromnetz 27 verbunden. Daher weist die Ladestation 1 einen zweiten Gleichrichter 25.2 auf, um einen Wechselstrom des Stromnetzes 27 in einen Gleichstrom zum Laden des elektrischen Energiespeichers 5 umzuwandeln.

Insbesondere generiert das mindestens eine Photovoltaik-Modul 7 die elektrische Leistung als Gleichstrom und ist elektrisch direkt mit dem elektrischen Energiespeicher 5 verbunden. Alternativ generiert das mindestens eine Photovoltaik-Modul 7 die elektrische Leistung als Wechselstrom. In diesem Fall weist die Ladestation 1 - analog zu Figur 1 a - den ersten Gleichrichter 25.1 auf, um einen Wechselstrom des mindestens einen Photovoltaik-Moduls 7 in einen Gleichstrom zum Laden des elektrischen Energiespeichers 5 umzuwandeln.

**Figur 1 c** zeigt die schematische Darstellung des zweiten Ausführungsbeispiels der Ladestation 1. Die Ladestation 1 ist elektrisch mit dem Stromnetz 27 verbunden und das mindestens eine Photovoltaik-Modul 7 generiert die elektrische Leistung als Wechselstrom.

Die Ladestation 1 weist zusätzlich ein Regelmodul 29 auf. Das Regelmodul 29 ist elektrisch zwischen dem mindestens einen Photovoltaik-Modul 7 und dem elektrischen Energiespeicher 5 angeordnet. Weiterhin ist das Regelmodul 29 eingerichtet, um die von dem mindestens einen Photovoltaik-Modul 7 generierte elektrische Leistung ausschließlich dem elektrischen Energiespeicher 5 zuzuführen. Weiterhin sind das Stromnetz 27 und das mindestens eine Photovoltaik-Modul 7 elektrisch mit dem Regelmodul 29 verbunden. Dabei ist das Regelmodul 29 insbesondere zusätzlich eingerichtet, um eine Einspeisung der von dem mindestens einen Photovoltaik-Modul 7 generierten elektrischen Leistung in das Stromnetz 27 zu blockieren, sodass die Ladestation 1 elektrische Leistung nur für den Eigenbedarf erzeugt und keine Einspeisung in der Stromnetz 27 durchgeführt wird.

Weiterhin weist die Ladestation 1 einen Gleichrichter 25 auf, um einen Wechselstrom des mindestens einen Photovoltaik-Moduls 7 und des Stromnetzes 27 in einen Gleichstrom zum Laden des elektrischen Energiespeichers 5 umzuwandeln.

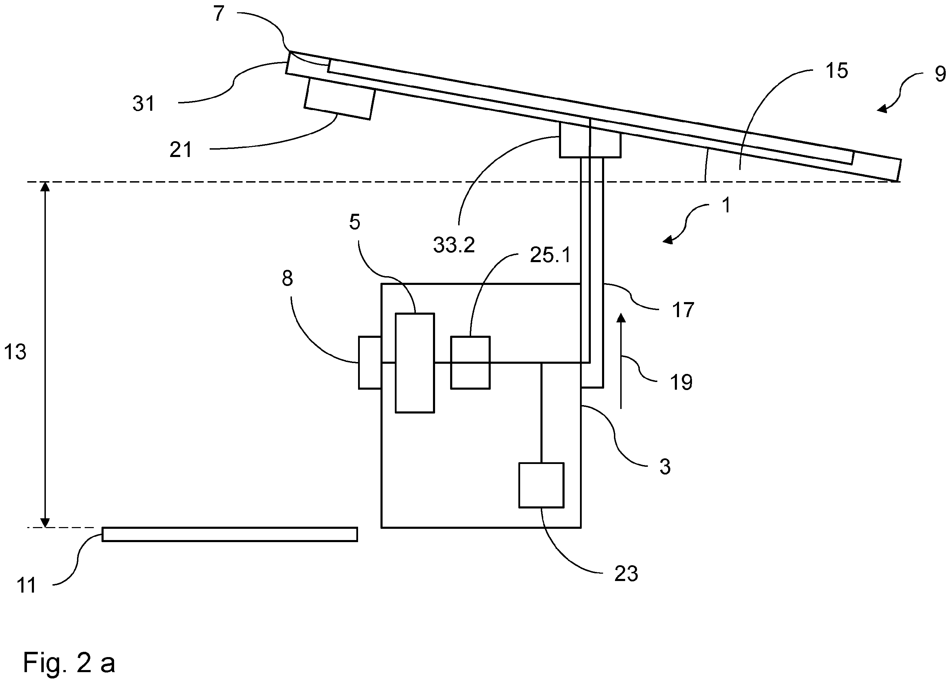

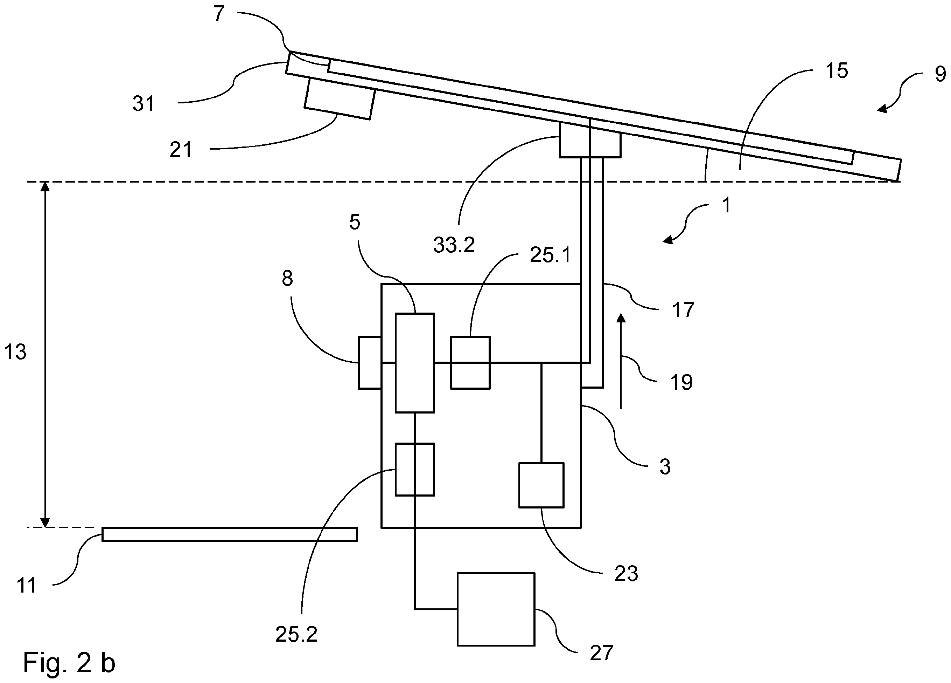

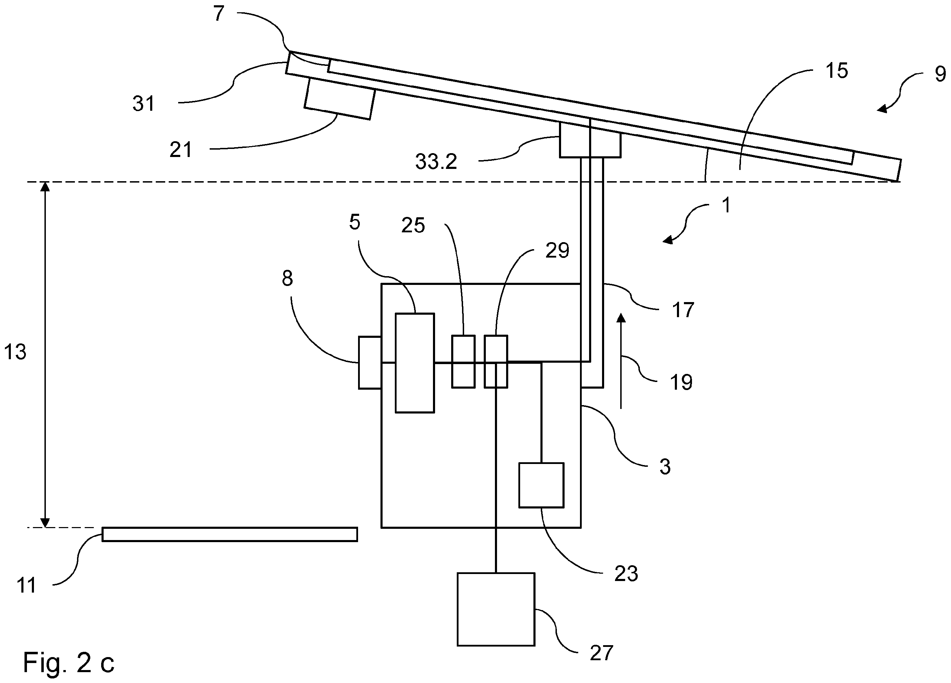

**Figur 2** zeigt eine schematische Darstellung eines vierten, fünften und sechsten Ausführungsbeispiels der Ladestation 1. Insbesondere unterscheiden sich die Ausführungsbeispiele aus Figur 2 gegenüber den Ausführungsbeispielen aus Figur 1 in der Anordnung des mindestens einen Photovoltaik-Moduls 7 an dem Gehäuse 3.

Gleiche und funktionsgleiche Elemente sind in allen Figuren mit denselben Bezugszeichen versehen, sodass insofern auf die jeweils vorangegangene Beschreibung verwiesen wird.

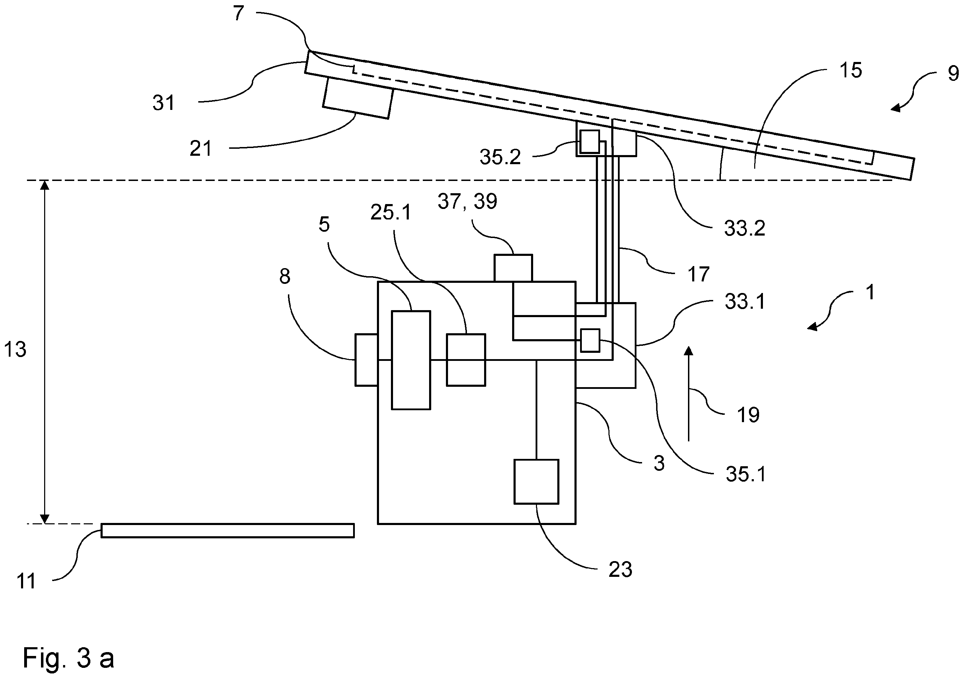

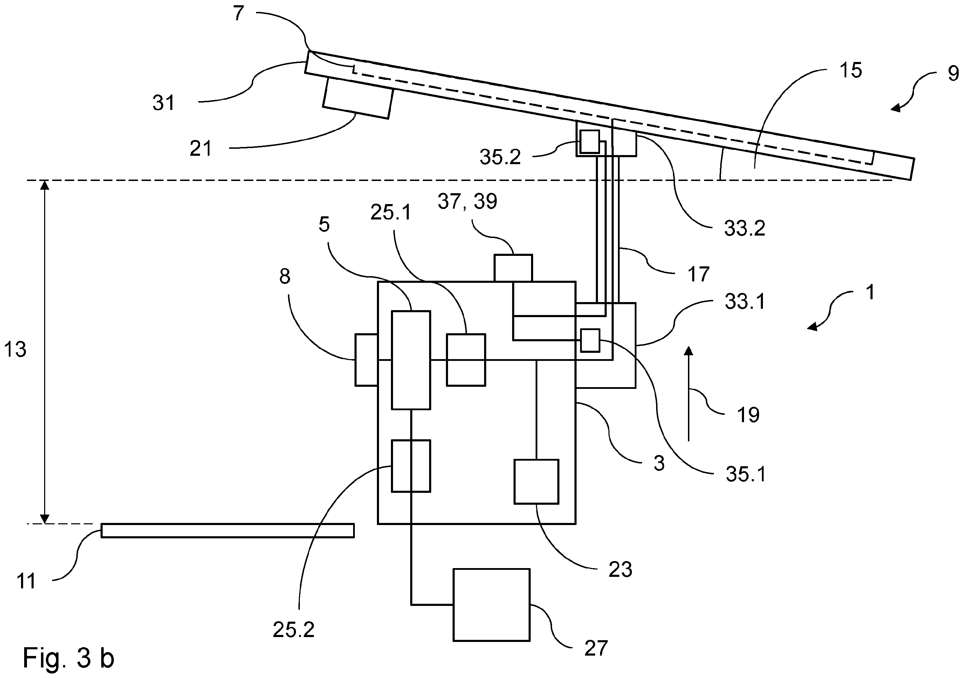

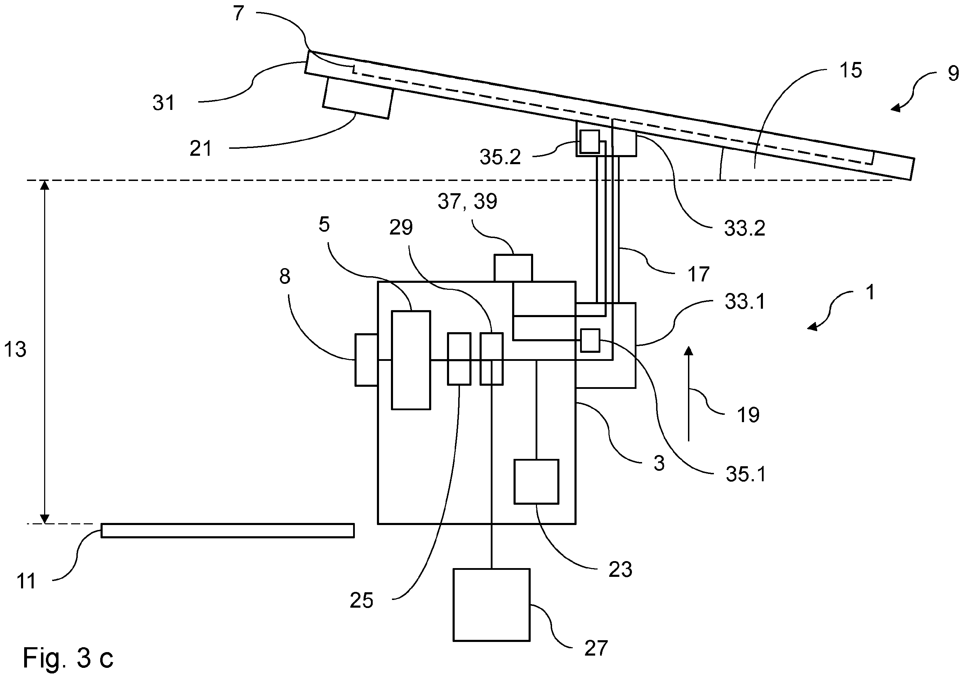

Die Ladestation 1 weist einen Rahmen 31 auf, wobei das mindestens eine Photovoltaik-Modul 7 in dem Rahmen 31 angeordnet ist. Weiterhin weist die Ladestation 1 - alternativ oder zusätzlich zu einer in Figur 3 dargestellten ersten Befestigungsvorrichtung 33.1 - eine zweite Befestigungsvorrichtung 33.2 auf und der Rahmen 31 ist über die zweite Befestigungsvorrichtung 33.2 mit dem Gehäuse 3 verbunden. Insbesondere ist der Rahmen 31 über die zweite Befestigungsvorrichtung 33.2 mit der Trägervorrichtung 17 verbunden.

Insbesondere ist die zweite Befestigungsvorrichtung 33.2 als Schnellverschluss ausgebildet. Alternativ oder zusätzlich ist die zweite Befestigungsvorrichtung 33.2 zentrisch an dem Rahmen 31 angeordnet. Alternativ oder zusätzlich ist die zweite Befestigungsvorrichtung 33.2 in einem Schwerpunkt des Rahmens 31 mit dem darin angeordneten mindestens einen Photovoltaik-Modul 7 angeordnet.

Besonders bevorzugt sind der Rahmen 31 und das darin angeordnete mindestens eine Photovoltaik-Modul 7 als das Dach 9 ausgebildet.

**Figur 2** **a** zeigt die schematische Darstellung des vierten Ausführungsbeispiels der Ladestation 1. Die Ladestation 1 ist autark ausgebildet und wird ohne elektrische Verbindung zu einem Stromnetz betrieben.

Das vierte Ausführungsbeispiel der Ladestation 1 ist, bis auf den Rahmen 31 und die zweite Befestigungsvorrichtung 33.2, analog zu dem ersten Ausführungsbeispiel der Ladestation 1 aus Figur 1 a ausgebildet. Insofern wird auf die Beschreibung der Figur 1 a verwiesen.

**Figur 2 b** zeigt die schematische Darstellung des fünften Ausführungsbeispiels der Ladestation 1. Die Ladestation 1 ist elektrisch mit dem Stromnetz 27 verbunden.

Das fünfte Ausführungsbeispiel der Ladestation 1 ist, bis auf den Rahmen 31 und die zweite Befestigungsvorrichtung 33.2, analog zu dem zweiten Ausführungsbeispiel der Ladestation 1 aus Figur 1 b ausgebildet. Insofern wird auf die Beschreibung der Figur 1 b verwiesen.

**Figur 2 c** zeigt die schematische Darstellung des sechsten Ausführungsbeispiels der Ladestation 1. Die Ladestation 1 ist elektrisch mit dem Stromnetz 27 verbunden und das mindestens eine Photovoltaik-Modul 7 generiert die elektrische Leistung als Wechselstrom.

Das sechste Ausführungsbeispiel der Ladestation 1 ist, bis auf den Rahmen 31 und die zweite Befestigungsvorrichtung 33.2, analog zu dem dritten Ausführungsbeispiel der Ladestation 1 aus Figur 1 c ausgebildet. Insofern wird auf die Beschreibung der Figur 1 c verwiesen.

**Figur 3** zeigt eine schematische Darstellung eines siebten, achten und neunten Ausführungsbeispiels der Ladestation 1. Insbesondere unterscheiden sich die Ausführungsbeispiele aus Figur 3 gegenüber den Ausführungsbeispielen aus Figur 1 und Figur 2 in der Anordnung des mindestens einen Photovoltaik-Moduls 7 an dem Gehäuse 3.

Die Trägervorrichtung 17 ist über eine erste Befestigungsvorrichtung 33.1 - insbesondere schwenkbar - mit dem Gehäuse 3 verbunden. Insbesondere ist die erste Befestigungsvorrichtung 33.1 als Schnellverschluss ausgebildet.

Insbesondere weist die erste Befestigungsvorrichtung 33.1 ein erstes Drehgelenk auf. Alternativ oder zusätzlich weist die erste Befestigungsvorrichtung 33.1 einen ersten Aktor 35.1 auf. Der erste Aktor 35.1 ist insbesondere eingerichtet, um die Trägervorrichtung 17 relativ zu dem Gehäuse 3 zu drehen. Insbesondere ist der erste Aktor 35.1 kabelgebunden oder kabellos ansteuerbar, sodass ein Betreiber der Ladestation 1 in einfacher Weise eine Drehung der Trägervorrichtung 17 relativ zu dem Gehäuse 3 initiieren kann. Insbesondere ist die erste Befestigungsvorrichtung 33.1 eingerichtet, um die Trägervorrichtung 17 um die Axialrichtung 19 der Trägervorrichtung 17 zu drehen.

Das Dach 9 - insbesondere das mindestens eine Photovoltaik-Modul 7 oder der Rahmen 31 mit dem darin angeordneten mindestens einen Photovoltaik-Modul 7 - ist über die zweite Befestigungsvorrichtung 33.2 - insbesondere schwenkbar - mit der Trägervorrichtung 17 verbunden.

Insbesondere weist die zweite Befestigungsvorrichtung 33.2 ein zweites Drehgelenk auf. Alternativ oder zusätzlich weist die zweite Befestigungsvorrichtung 33.2 einen zweiten Aktor 35.2 auf. Der zweite Aktor 35.2 ist insbesondere eingerichtet, um das mindestens eine Photovoltaik-Modul 7 relativ zu der Trägervorrichtung 17 zu drehen. Insbesondere ist der zweite Aktor 35.2 kabelgebunden oder kabellos ansteuerbar, sodass der Betreiber der Ladestation 1 in einfacher Weise eine Drehung des mindestens einen Photovoltaik-Moduls 7 relativ zu der Trägervorrichtung 17 initiieren kann. Insbesondere ist die zweite Befestigungsvorrichtung 33.2 eingerichtet, um das mindestens eine Photovoltaik-Modul 7 um die Axialrichtung 19 der Trägervorrichtung 17 zu drehen. Alternativ oder zusätzlich ist die zweite Befestigungsvorrichtung 33.2 eingerichtet, um das mindestens eine Photovoltaik-Modul 7 um eine beliebige Rotationsachse zu drehen. Alternativ oder zusätzlich ist die zweite Befestigungsvorrichtung 33.2 eingerichtet, um das mindestens eine Photovoltaik-Modul 7 relativ zu der Trägervorrichtung 17 zu neigen und damit insbesondere den Neigungswinkel 15 zu verändern.

In einer Ausgestaltung weist die Ladestation 1 ein Steuerungsmodul 37 auf. Das Steuerungsmodul 37 ist eingerichtet, um den ersten Aktor 35.1 und/oder den zweiten Aktor 35.2 anzusteuern. Insbesondere ist das Steuerungsmodul 37 eingerichtet, um den ersten Aktor 35.1 und/oder den zweiten Aktor 35.2 derart anzusteuern, dass das mindestens eine Photovoltaik-Modul 7 - insbesondere im Verlauf eines Tages - gemäß einer vorbestimmten Trajektorie relativ zu dem Gehäuse 3 bewegt, insbesondere dem Sonnenstand nachgeführt wird.

In einer alternativen Ausgestaltung weist die Ladestation 1 eine Sonnenstand-Messvorrichtung 39 auf. Die Sonnenstand-Messvorrichtung 39 ist eingerichtet, um den Sonnenstand zu ermitteln und den ersten Aktor 35.1 der ersten Befestigungsvorrichtung 33.1 derart anzusteuern, dass das mindestens eine Photovoltaik-Modul 7 entsprechend dem ermittelten Sonnenstand ausgerichtet werden kann. Alternativ oder zusätzlich ist die Sonnenstand-Messvorrichtung 39 eingerichtet, um den Sonnenstand zu ermitteln und den zweiten Aktor 35.2 der zweiten Befestigungsvorrichtung 33.2 derart anzusteuern, dass das mindestens eine Photovoltaik-Modul 7 entsprechend dem ermittelten Sonnenstand ausgerichtet werden kann.

**Figur 3** **a** zeigt die schematische Darstellung des siebten Ausführungsbeispiels der Ladestation 1. Die Ladestation 1 ist autark ausgebildet und wird ohne elektrische Verbindung zu einem Stromnetz betrieben.

Das siebte Ausführungsbeispiel der Ladestation 1 ist, bis auf die Anordnung des mindestens einen Photovoltaik-Moduls 7, analog zu dem ersten Ausführungsbeispiel der Ladestation 1 aus Figur 1 a und dem vierten Ausführungsbeispiel der Ladestation 1 aus Figur 2 a ausgebildet. Insofern wird auf die Beschreibung der Figuren 1 a und 2 a verwiesen.

**Figur 3 b** zeigt die schematische Darstellung des achten Ausführungsbeispiels der Ladestation 1. Die Ladestation 1 ist elektrisch mit dem Stromnetz 27 verbunden.

Das achte Ausführungsbeispiel der Ladestation 1 ist, bis auf die Anordnung des mindestens einen Photovoltaik-Moduls 7, analog zu dem zweiten Ausführungsbeispiel der Ladestation 1 aus Figur 1 b und dem fünften Ausführungsbeispiel der Ladestation 1 aus Figur 2 b ausgebildet.Insofern wird auf die Beschreibung der Figuren 1 b und 2 b verwiesen.

**Figur 3 c** zeigt die schematische Darstellung des sechsten Ausführungsbeispiels der Ladestation 1. Die Ladestation 1 ist elektrisch mit dem Stromnetz 27 verbunden und das mindestens eine Photovoltaik-Modul 7 generiert die elektrische Leistung als Wechselstrom.

Das neunte Ausführungsbeispiel der Ladestation 1 ist, bis auf die Anordnung des mindestens einen Photovoltaik-Moduls 7, analog zu dem dritten Ausführungsbeispiel der Ladestation 1 aus Figur 1 c und dem sechsten Ausführungsbeispiel der Ladestation 1 aus Figur 2 c ausgebildet. Insofern wird auf die Beschreibung der Figuren 1 c und 2 c verwiesen.

## Patentansprüche

1. Ladestation (1) mit einem Gehäuse (3), einem elektrischen Energiespeicher (5), und mindestens einem Photovoltaik-Modul (7), wobei
- das mindestens eine Photovoltaik-Modul (7) mit dem Gehäuse (3) mechanisch verbunden ist, und wobei
- das mindestens eine Photovoltaik-Modul (7) elektrisch mit dem elektrischen Energiespeicher (5) verbunden ist, sodass der elektrische Energiespeicher (5) mit von dem mindestens einen Photovoltaik-Modul (7) generierter elektrischer Leistung geladen werden kann.

2. Ladestation (1) nach Anspruch 1 mit einem Regelmodul (29), wobei das Regelmodul (29) elektrisch zwischen dem mindestens einen Photovoltaik-Modul (7) und dem elektrischen Energiespeicher (5) angeordnet ist, und wobei das Regelmodul (29) eingerichtet ist, um die von dem mindestens einen Photovoltaik-Modul (7) generierte elektrische Leistung ausschließlich dem elektrischen Energiespeicher (5) zuzuführen.

3. Ladestation (1) nach einem der vorhergehenden Ansprüche, wobei das mindestens eine Photovoltaik-Modul (7) mittels einer Trägervorrichtung (17) mit dem Gehäuse (3) verbunden ist.

4. Ladestation (1) nach Anspruch 3, wobei die Trägervorrichtung (17) über eine erste Befestigungsvorrichtung (33.1) schwenkbar mit dem Gehäuse (3) verbunden ist.

5. Ladestation (1) nach Anspruch 3 oder 4, wobei das mindestens eine Photovoltaik-Modul (7) über eine zweite Befestigungsvorrichtung (33.2) schwenkbar mit der Trägervorrichtung (17) verbunden ist.

6. Ladestation (1) nach einem der Ansprüche 4 oder 5 mit einer Sonnenstand-Messvorrichtung (39), die eingerichtet ist, um einen Sonnenstand zu ermitteln und einen ersten Aktor (35.1) der ersten Befestigungsvorrichtung (33.1) und/oder einen zweiten Aktor (35.2) der zweiten Befestigungsvorrichtung (33.2) derart anzusteuern, dass das mindestens eine Photovoltaik-Modul (7) entsprechend dem ermittelten Sonnenstand ausgerichtet werden kann.

7. Ladestation (1) nach einem der vorhergehenden Ansprüche mit einem Rahmen (31), wobei
- das mindestens eine Photovoltaik-Modul (7) in dem Rahmen (31) angeordnet ist, wobei
- der Rahmen (31) über mindestens eine Befestigungsvorrichtung (33.1, 33.2) mit dem Gehäuse (3) verbunden ist.

8. Ladestation (1) nach einem der vorhergehenden Ansprüche, wobei das mindestens eine Photovoltaik-Modul (7) als ein Dach (9) ausgebildet ist, und wobei insbesondere das Gehäuse (3) geodätisch unter dem Dach (9) angeordnet ist.

9. Ladestation (1) nach Anspruch 8, wobei sich das Dach (9) zumindest teilweise über eine der Ladestation (1) zugeordneten Kraftfahrzeug-Stellfläche (11) erstreckt.

10. Ladestation (1) nach Anspruch 8 oder 9, wobei das Dach (9) eine Neigung (15) von mehr als 0 ° bis 40 ° aufweist.

11. Ladestation (1) nach einem der vorhergehenden Ansprüche mit einer Beleuchtungseinrichtung (21), wobei die Beleuchtungseinrichtung (21) derart an dem mindestens einen Photovoltaik-Modul (7) angeordnet ist, dass von der Beleuchtungseinrichtung (21) erzeugtes Licht geodätisch nach unten abgestrahlt wird.

12. Ladestation (1) nach einem der vorhergehenden Ansprüche mit sechs bis 16 Photovoltaik-Modulen (7) als dem mindestens einen Photovoltaik-Modul (7).
